# EUROPÄISCHE PATENTSCHRIFT

(11) **EP 0 290 947 B1**
(45) Veröffentlichungstag und Bekanntmachung des Hinweises auf die Patenterteilung: **13.12.1995**
(21) Anmeldenummer: 88107175.7
(22) Anmeldetag: 04.05.1988
(51) Int. Cl.: B01D 53/58, B01J 27/18

(54) **Katalytische Beseitigung von Ammoniak aus Abgasen**
Catalytic elimination of ammonia from exhaust gases
Elimination catalytique de l'ammoniac des gaz de fumée

(30) Priorität: 12.05.1987 DE 3715746; 15.02.1988 DE 3804723
(43) Veröffentlichungstag der Anmeldung: 17.11.1988
(73) Patentinhaber: SIEMENS AKTIENGESELLSCHAFT, 80333 München (DE)
(72) Erfinder: Wittrowsky, Günter, D-8520 Erlangen (DE); Schott, Manfred, D-8520 Erlangen (DE); Sprehe, Josef, Dipl.-Ing., D-8510 Fürth/Vach (DE); Brückner, Belinda, Dipl.-Chem., D-8503 Altdorf (DE)

(56) Entgegenhaltungen:
- FR-A- 2 327 814
- US-A- 4 179 407
- CHEMICAL ABSTRACTS, Band 89, Nr. 17, 14 August 1978, Seite 291, Zusammenfassung Nr. 64466b, Columbus, Ohio, US; & JP-A-78 10 363 (MITSUBISHI CHEMICAL INDUSTRIES CO. LTD) 15-07-1976
- JAPANESE PATENT REPORT, Band 80, Nr. 42, Oktober 1980, Section J, "Chemical Engineering", Derwent Publications Ltd, London, GB; & JP-N-80 040 045 (KYUSHU SEKISUI KIG) 15-10-1980
- JAPANESE PATENT REPORT, Band 82, Nr. 2, Januar 1982, Section J, "Chemical Engineering", Derwent Publications Ltd, London, GB; & JP-B-82 001 288 (STANDARD OIL CO.) 11-01-1982

## Beschreibung

Die Erfindung betrifft ein Verfahren zum Entfernen von Ammoniak aus einer ammoniakhaltigen Flüssigkeit, insbesondere aus ammoniakhaltigen Abwasser, wobei nach einem Stoffaustausch ammoniakfreie Flüssigkeit und ammoniakhaltiges Gas (Abgas) abgegeben werden.

Die Erfindung betrifft auch eine Vorrichtung zum Entfernen von Ammoniak, wobei eine Wasserzuleitung für eine ammoniakhaltige Flüssigkeit, insbesondere für ein ammoniakhaltiges Abwasser, mit einer Stoffaustauschkolonne verbunden ist, die eine Gaszuleitung aufweist und von der eine Wasserableitung für ammoniakfreies Wasser und eine Gasableitung für ammoniakhaltiges Gas (Abgas) ausgehen.

Manche industrielle Abgase enthalten gasförmiges Ammoniak (NH₃). Dies gilt beispielsweise für die Abluft bei einem Kernkraftwerk, wo das Ammoniak z.B. aus der Umsetzung des für den Korrosionsschutz verwendeten Hydrazins herrührt, wo es in Abwasser abgeschieden wird, und wo bei Anwendung des sogenannten Stripp-Verfahrens, eines Reinigungsverfahrens,die mit Ammoniak beladene Abluft entsteht. Dies gilt aber auch z.B. für die Abgase aus Kohlekraftwerken, bei denen ein Katalysatormaterial zur Reduktion von Stickoxiden im Rauchgas, dem absichtlich Ammoniak beigefügt wird, eingesetzt wird (vergl. DE-A-35 31 809); trotz ausgefeilter Regelungstechniken kann es bei einem Reaktor mit einem solchen Katalysatormaterial zu keiner vollständigen chemischen Umsetzung und somit zu einem Überschuß an Ammoniak kommen, das dann unerwünschterweise im Abgas enthalten ist. Das Problem der Beseitigung von Ammoniak aus Abgasen stellt sich also in der Technik in vielfältiger Form. Bekanntermaßen hat die Ammoniakemission zumindest in höheren Konzentrationen Umweltschäden zur Folge.

Bisher wurde das Problem der Ammoniak-Gasreinigung durch unterschiedliche Verfahren gelöst:
a) Es wurde eine Gaswäsche in einem (Schwefel-)Säurebad vorgenommen; nachteilig hierbei ist, daß Ammoniumsalze als Abfallprodukte anfallen.
   Dieses Salz ist jedoch nur bedingt als Düngemittel einsetzbar. Besonders dann, falls das bekannte Verfahren zum Entfernen von Ammoniak sehr häufig angewendet wird, ist die anfallende Ammoniumsulfatmenge nicht mehr vollständig verwertbar. Außerdem ist Ammoniumsulfat als Düngesalz für viele Böden ungeeignet.
   Bei der Reinigung von ammoniakhaltigem Abwasser, das aus dem Kontrollbereich von Kernkraftwerken stammt, ist dieses Verfahren nicht anwendbar, da anzunehmen ist, daß das entstehende Ammoniumsulfat überhaupt nicht weiter verwendet werden darf. Die dann notwendige, weitere Aufbereitung zu einem lagerfähigen Produkt verursacht hohe Kosten und benötigt Lagerraum.
b) Liegt das Ammoniak in wäßriger Phase vor, so wurden gelegentlich auch biotechnologische Verfahren eingesetzt; die Oxidation des Ammoniak führt hierbei jedoch zu NO₃⁻ oder zu unerwünschtem Distickstoffoxid N₂O.
c) Es wurden Platinkatalysatoren bei höherer Temperatur eingesetzt; dies führte wiederum überwiegend zu einer Oxidation des Ammoniaks zu Stickoxiden NOₓ, welche ebenfalls unerwünscht sind.
d) Bei weiteren bekannten Verfahren zum Entfernen von Ammoniak aus Abwasser wird das Ammoniak als eine konzentrierte Lösung zurückgewonnen, wobei die Aufkonzentrierung mit Stoffaustauschkolonnen durch Rektifikation oder durch Wasserdampfstrippen erfolgt. Sehr nachteilig bei diesem Verfahren ist der hohe Energieverbrauch.

Aus der FR-A- 2 327 814 und aus Chemical Abstracts, Band 89 Nr. 17, Seite 251, Zusammenfassung Nr. 64466b, sind Verfahren zur katalytischen Behandlung von Gasen bekannt, die Ammoniak und Sauerstoff enthalten. Dazu werden Katalysatoren eingesetzt, die einerseits Titandioxid und andererseits ein anderes Metalloxid, beispielsweise Chromoxid oder Kupferoxid, enthalten. Aus der FR-A- 2 327 814 ist außerdem zu entnehmen, daß durch die geschilderte katalytische Behandlung aus Ammoniak und Sauerstoff Stickstoff und Wasser gebildet werden.

Der Erfindung lag die Aufgabe zugrunde, ein Verfahren und eine Einrichtung zum Entfernen von Ammoniak aus einer ammoniakhaltigen Flüssigkeit anzugeben, die mit möglichst wenig externer Energie auskommen und darüber hinaus keine schädlichen Stoffe abgeben. Darüber hinaus soll auch möglichst wenig Abgas abgegeben werden.

Die Aufgabe, ein geeignetes Verfahren anzugeben, wird durch die kennzeichnenden Merkmale des unabhängigen Patentanspruches 1 gelöst.

Vorteilhafte Ausgestaltungen des Verfahrens sind den Unteransprüchen zu entnehmen.

Das Abgas, das gasförmigen Ammoniak enthalt, wird zusammen mit Sauerstoff, insbesondere zusammen mit Luft, in einem vorgegebenen Temperaturbereich einem selektiven Katalysator zugeführt, an dem das Ammoniak zu Stickstoff und Wasser oxidiert wird. Dabei ist der Katalysator ein Mischoxid-Katalysator, der Titandioxid und mindestens ein Oxid der Übergangsmetalle Vanadium, Chrom, Mangan, Eisen, Kobalt, Nickel, Kupfer, Zink, Zirkon, Molybdän, Wolfram, Platin und Rhodium enthält. Vom Katalysator werden der Stickstoff und das Wasser abgeleitet. Der für die Oxidation im Katalysator benötigte Sauerstoff kann dabei bereits im Abgas enthalten sein; er kann aber auch besonders hinzugesetzt werden. In O₂-freien Gasen ist überraschenderweise eine Zersetzung von NH₃ in N₂ und H₂ möglich, wie Experimente ergeben haben. Diese Zersetzung tritt dabei schon bei relativ niedrigen Temperaturen ein, z.B. unterhalb von 300° C.

Man kann somit sagen, daß das Problem der Ammoniak-Beseitigung aus einem Abgas vorwiegend durch eine selektive katalytische Oxidation an einem speziellen Mischoxid-Katalysator gelöst wird. Dieses Verfahren könnte man - in Anlehnung an den Sprachgebrauch beim bekannten selektiven katalytischen Reduktionsverfahren ("SCR-Verfahren", vergl. DE-A-35 31 809) - als "selektives katalytisches Oxidations-Verfahren" ("SCO-Verfahren") bezeichnen.

Bevorzugt wird so vorgegangen, daß der Katalysator außer Titandioxid auch Chromoxid enthält. Diese Kombination hat besonders gute Ergebnisse hinsichtlich der Umsetzung von Ammoniak gebracht. Gute Ergebnisse werden aber auch erzielt, wenn dem Titandioxid Manganoxid oder Kupferoxid beigemischt sind. Auch Beimischungen von zwei der drei genannten Oxide der Übergangsmetalle Chrom, Mangan und Kupfer zum Titandioxid liefern gute Ergebnisse. Dies gilt auch für eine Beimengung aller drei Oxide des Chroms, Mangans und Kupfers zum Titandioxid. Letzteres wird bevorzugt in der unter dem Namen "Anatas" bekannten kristallinen Modifikation eingesetzt. Zur Lebensdauerverlängerung wird bevorzugt WO₃ und/oder MoO₃ eingesetzt, d. h. in den Katalysator eingebracht. Mit diesen Komponenten wird die spezifische Oberfläche des Katalysatormaterials stabilisiert.

Zur mengenmäßigen Bemessung der einzelnen Bestandteile des Katalysators ist folgendes zu sagen: Es wird bevorzugt so vorgegangen, daß der Anteil des Chromoxids (Cr₂O₃), des Manganoxids (MnO₂) oder des Kupferoxids (CuO) höchstens 50 Gew. % des Mischoxid-Katalysators ausmacht. Eine Verteilung von etwa 50 Gew. % Titandioxid zu 50 % Übergangsmetall-Oxid(e) kann für viele Anwendungsfälle angemessen sein. Denn es hat sich überraschenderweise gezeigt, daß eine Verteilung von 50 Gew. % Titandioxid zu 50 Gew. % Chromoxid (Cr₂O₃) aktiver ist als ein Verhältnis von 80 Gew. % zu 20 Gew. % derselben Substanzen.

Um eine hohe Umsetzungsrate von Ammoniak in die umweltverträglichen Folgeprodukte Stickstoff und Wasser bei dem genannten Katalysator zu erhalten, ist weiter vorgesehen, daß das Abgas einschließlich Ammoniak und Sauerstoff vor der Zuführung zum Katalysator bevorzugt auf eine Temperatur im Bereich von 150 bis 300° C gebracht wird. Den gleichen Erfolg erzielt man auch, wenn im Mischoxid-Katalysator eine höhere Temperatur vorliegt, so daß sich das Abgas dort erwärmen kann.

Bei hohen Eingangskonzentrationen an Ammoniak wird durch die freigesetzte Reaktionswärme am Katalysator nur noch ein "Anfahraufheizen" notwendig. Eine Wärmezufuhr ist nicht mehr nötig; eventuell kann die freiwerdende Reaktionswärme genutzt werden.

Die katalytische Oxidation von Ammoniak kann durch folgende Reaktionsgleichungen beschrieben werden:

2 NH₃ + 1/2 O₂ ⇒ N₂ + 3 H₂O (1)

2 NH₃ + 2 O₂ ⇒ N₂O + 3 H₂O (2)

2 NH₃ + 2,5 O₂ ⇒ 2 NO + 3 H₂O (3)

2 NH₃ ⇒ N₂ + 3 H₂ (4)

Es ist festzuhalten: Der genannte Katalysator oxidiert Ammoniak (NH₃) im Temperaturbereich von 150° C bis 300° C hochselektiv zu Stickstoff (N₂) nach der angegebenen Gleichung (1). Eine Oxidation zu den Stickoxiden N₂O und NO gemäß den Gleichungen (2) bzw. (3) findet im genannten Temperaturbereich praktisch nicht statt. Es ist nach Gleichung (4) auch möglich, ohne Sauerstoff NH₃ direkt zu Stickstoff und Wasserstoff umzusetzen, und zwar bei relativ niedrigen Temperaturen.

Der genannte Katalysator ist also bei relativ niedrigen Temperaturen katalytisch aktiv. Damit werden die Kosten für das Verfahren zur Beseitigung von Ammoniak aus Abgas gegenüber dem bekannten Verfahren mit Einsatz eines Platinkatalysators, bei dem der Gasstrom auf eine sehr hohe Temperatur aufgeheizt werden muß, erheblich reduziert.

Als weiterer Vorteil ist zu verzeichnen, daß der katalytisch aktive Kontaktbereich des Katalysators hochaktiv ist. Damit läßt sich die insgesamt einzusetzende Katalysatormasse klein halten, was die Anforderungen an den Unterbringungsraum ebenfalls klein hält.

Der für das erfindungsgemäße Verfahren eingesetzte Katalysator ist beispielsweise ein Mischoxid-Katalysator, der in einem Temperaturbereich von 200 - 500°C arbeitet. Die Reaktion zwischen Ammoniak und Sauerstoff läßt dabei direkt Stickstoff und Wasser oder als Zwischenstufe Stickoxid und Wasser entstehen. Stickoxid reagiert aber noch im Katalysator mit überschüssigem Ammoniak ebenfalls zu Stickstoff und Wasser. Zum Erreichen der Reaktionstemperatur wird das dem Katalysator zugeführte Gas erhitzt. Als weitere Möglichkeit kann dem Mischoxid-Katalysator außer ammoniakhaltigem Gas und Sauerstoff oder Luft Stickoxid zugeleitet werden.

Nach einem weiteren Beispiel wird ein Gemisch aus ammoniakhaltigem Gas und Sauerstoff, insbesondere ammoniakhaltigem Gas und Luft, zunächst aufgeteilt. Der erste Anteil des Gemisches wird einem Edelmetall-Katalysator zugeführt, der Stickoxid abgibt. Der zweite Anteil des Gemisches wird gemeinsam mit dem im Edelmetall Katalysator gebildeten Stickoxid als Gemisch einem Mischoxid-Katalysator zugeführt. Dieser gibt dann Stickstoff und Wasser ab.

Hiermit wird erzielt, daß die beiden Katalysatortypen sich gegenseitig ergänzend, arbeiten. Das benötigte Stickoxid wird aus Ammoniak und Sauerstoff im Edelmetall-Katalysator gebildet.

Ein optimales Zusammenwirken der beiden Katalysatoren wird erzielt, wenn der erste Anteil des zugeführten Gases, der durch den Edelmetall-Katalysator geleitet wird, ca. 60 % der Gesamtgasmenge ist.

Das erfindungsgemäße Verfahren ist vorteilhaft zum Entfernen von Ammoniak aus dem Abwasser eines Kraftwerkes einsetzbar. Ammoniak gelangt in das Abwasser von Kraftwerken durch die thermische Zersetzung von Hydrazin, das zur Verhinderung von Korrosion an Leitungen, Armaturen und Komponenten dem Wasser-Dampfkreislauf zudosiert wird.

Die Aufgabe, eine geeignete Vorrichtung zum Entfernen von Ammoniak anzugeben, wird durch den kennzeichnenden Teil des unabhängigen Patentanspruches 10 gelöst.

Vorteilhafte Ausgestaltungen sind den Unteransprüchen 11 bis 18 zu entnehmen.

Bei dem genannten Mischoxid-Katalysator ist eine Ausführungsform bevorzugt, bei der eines oder mehrere Oxide der drei Übergangsmetalle Chrom, Mangan und/oder Kupfer zum Titandioxid beigemischt sind. Als Vorteil ist zu verzeichnen, daß die Reaktionen nach den Gleichungen (1) und (4) bei Verwendung eines solchen Katalysators in einem besonders großen Temperaturbereich abläuft. Deswegen arbeitet der Katalysator besonders stabil, d.h. er ist relativ unempfindlich bei Schwankungen der NH₃-Eingangskonzentration.

Es soll noch einmal festgehalten werden: Der Katalysator besteht zu einem erheblichen Gewichtsanteil, der 50 % betragen kann, aus Titandioxid (TiO₂), bevorzugt in der kristallinen Anatasform. Diese kristalline Form hat beispielsweise eine höhere BET-Oberfläche als Rutil, eine andere Modifikation des Titanoxids. Als katalytisch aktive Komponenten werden Verbindungen und/oder Oxide oder sogar Mischoxide der Übergangsmetalle V, Cr, Mn, Fe, Co, Ni, Cu, Zn, Zr, Mo, W, Pt und Rh eingesetzt.

Der Katalysator kann weiterhin Nebenbestandteile, wie z. B. Phosphor oder Schwefel, enthalten. Das Phosphor kann während des Herstellungsprozesses beispielsweise in Form eines Oxids des Phosphors oder eines Phosphats beigegeben werden. Es hat sich gezeigt, daß durch eine solche Beigabe von Phosphor-Verbindungen die Festigkeit des fertigen Katalysators erhöht werden kann. Der Schwefel, der zu einer Erhöhung der katalytischen Wirkung führen kann, kann während des Herstellverfahrens in Form von Schwefelsäure, aus der sich ein Sulfat abscheidet, oder als reines Sulfat beigegeben werden. Darüber hinaus ist es möglich, daß der Katalysator in seiner fertigen Form ein Bindemittel in anorganischer oder organischer Form enthält. Solche Bindemittel sind beispielsweise aus den Herstellungsprozessen bei dem bekannten SCR-Verfahren bekannt. Sie können als Gleitmittel beim Extrudieren von Vorteil sein. Außerdem hat sich gezeigt, daß solche Bindemittel beim Calcinieren herausbrennen und dabei das spezifische Porenvolumen des fertigen Katalysators erhöhen.

Der Katalysator der genannten Art kann dadurch hergestellt werden,
a) daß Titandioxid (TiO₂) und mindestens ein Oxid der Übergangsmetalle wie insbesondere Chromoxid (Cr₂O₃), Manganoxid (MnO₂) und Kupferoxid (CuO) gemahlen und innig miteinander zu einer Mischung gemischt werden,
b) daß diese Mischung anschließend gefiltert wird, wobei ein Filterkuchen zurückbleibt,
c) daß dem Filterkuchen ein Bindemittel beigegeben wird,
d) daß Filterkuchen und Bindemittel geknetet werden, wobei eine formbare Masse entsteht,
e) daß diese Masse sodann in eine vorgegebene Form gebracht wird, z. B. auf Platten aufgetragen, in Waben oder Pellets extrudiert wird,
f) daß die geformte Masse sodann einer Trocknungsbehandlung bei Temperaturen im Bereich von 100 bis 140° C unterzogen wird, und
g) daß schließlich die getrocknete, geformte Masse einer Glühbehandlung bei 500° C oder mehr ausgesetzt wird.

Insbesondere kann bei der Herstellung folgendermaßen vorgegangen werden: Die innige mechanische Mischung der Komponenten (Titandioxid und Übergangsmetall-Oxid, gegebenenfalls auch Nebenbestandteile oder Bindemittel) erfolgt in einem Dissolver oder in einer Rührwerksmühle. Diese hier erhaltene Mischung wird sodann mittels einer Filterpresse gefiltert, wobei der erwähnte Filterkuchen übrig bleibt. Diesem Filterkuchen wird gegebenenfalls das Bindemittel beigefügt. Anschließend wird in einem Kneter geknetet. Die fertige Masse wird sodann der Formgebung (Platte, Wabe, Pellets) unterzogen. Also kann beispielsweise die Katalysatormischung auf Metallplatten oder Drahtnetze aufgetragen werden, wobei letztere insbesondere aus Edelstahl bestehen können. Die Metallplatten können dabei mit Aluminium flammgespritzt sein. Die Mischung kann aber auch zu den erwähnten Waben extrudiert werden, wobei zuvor der Mischung ein Mittel zum Gleiten zugesetzt wird. Schließlich kann die Mischung auch zu zylindrischen Pellets extrudiert werden. Die so erhaltene Form (Platte, Habe, Pellets) wird sodann der Trocknungsbehandlung, beispielsweise bei 120° C, und anschließend der Glühbehandlung, beispielsweise bei über 500° C, unterzogen. Bei dem letztgenannten Vorgang erfolgt die Endcalcinierung.

Das Abgas kann mit Hilfe eines Gebläses einem den Katalysator enthaltenden Reaktor zugeleitet werden, an dessen Austritt eine Ableitung für ammoniakfreies Abgas vorgesehen ist.

Das Abgas kann auch über einen Wärmetauscher und gegebenenfalls eine Zusatzheizung mit Hilfe eines Gebläses einem den Katalysator enthaltenden Reaktor zugeleitet werden, an dessen Austritt eine Ableitung für ammoniakfreies Abgas vorgesehen ist, die über den Wärmetauscher mit einer Abgasleitung verbunden ist.

Beispielsweise sind statt nur einem Katalysator ein Edelmetall-Katalysator und ein Mischoxid-Katalysator in Serie angeordnet. Der Edelmetall-Katalysator ist dabei durch eine Bypaßleitung Überbrückt, die ca. 40 % des ankommenden Gases aufnimmt. Bei einer derartigen Anordnung ergänzen sich die beiden unterschiedlichen Katalysatoren bei der Entfernung von Ammoniak.

Eine Vorrichtung zum Entfernen von Ammoniak aus einer ammoniakhaltigen Flüssigkeit, insbesondere aus dem Abwasser eines Kraftwerkes, mit dem erfindungsgemäßen Verfahren weist eine an sich bekannte Stoffaustauschkolonne auf, die mit einer Zuleitung für die ammoniakhaltige Flüssigkeit verbunden ist. Die Austauschkolonne weist außerdem eine Gaszuleitung auf. Von der Austauschkolonne geht eine erste Ableitung für ammoniakfreies Wasser und eine zweite Ableitung für ammoniakhaltiges Gas aus. Die zweite Ableitung ist erfindungsgemäß über den wärmeaufnehmenden Raum eines Wärmetauschers und über einen Erhitzer mit dem Eingang eines Katalysators verbunden. Der Ausgang des Katalysators steht über den wärmeabgebenden Raum des Wärmetauschers und über ein Zirkulationsgebläse mit der Gaszuleitung der Austauschkolonne in Verbindung. Da der Sauerstoffverbrauch im Katalysator sehr gering ist, reicht es aus, einen kleinen Teilstrom des vorhandenen Luftvolumens kontinuierlich durch frische Luft zu ersetzen. Mit dieser Vorrichtung wird ein nahezu gegeschlossener Gaskreislauf gebildet. Nur ammoniakfreies Wasser wird abgeleitet. Die entstehenden Endprodukte Stickstoff und Wasser werden an die Atmosphäre bzw. an das ammoniakfreie Wasser abgegeben. Mit dem nahezu geschlossenen Gaskreislauf wird der Vorteil erzielt, daß dem System nur wenig Wärme zugeführt werden muß. Das anströmende Gas wird im Wärmetauscher durch das abströmende Gas vorgewärmt.

Das erfindungsgemäße Verfahren ist auch z.B. einsetzbar zum Entfernen von Ammoniak aus Gaswaschwässern, die beispielsweise bei der Müllverschwelung und in Kokereien anfallen. Ein weiteres Anwendungsgebiet sind Deponiesickerwässer.

Mit der Erfindung wird auch der Vorteil erzielt, daß erstmals Ammoniak aus Flüssigkeiten zu entfernen ist, ohne daß Nebenprodukte wie Ammoniumsulfat oder sogar Schadstoffe entstehen.

FIG 3 zeigt eine Einrichtung zum Entfernen von Ammoniak aus Abwasser mit dem erfindungsgemäßen Verfahren.

FIG 4 zeigt eine Verbindung von zwei verschiedenen Katalysatoren, die für das erfindungsgemäße Verfahren einsetzbar ist.

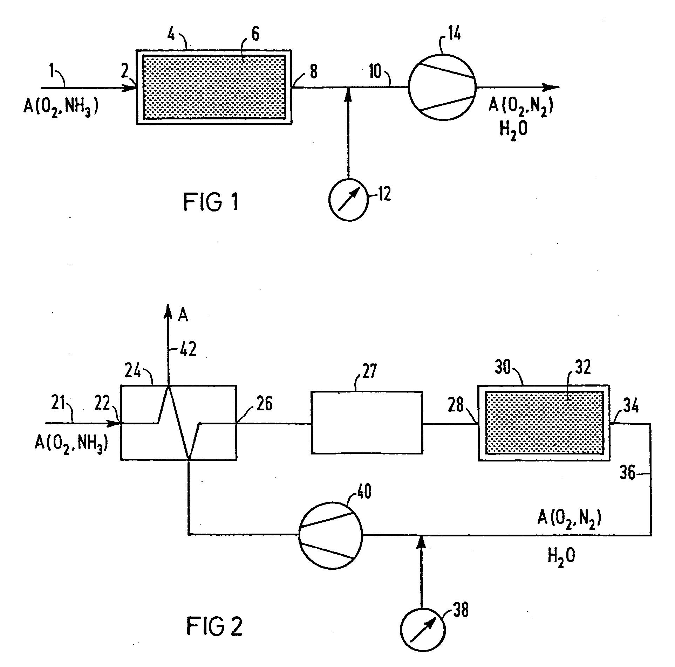

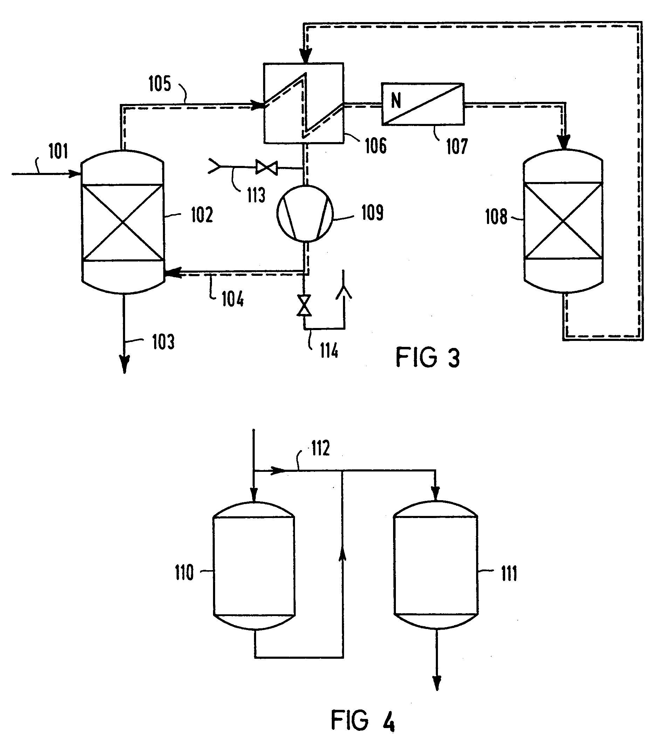

Die Figuren 1 und 2 zeigen Bauteile, die in der in den Figuren 3 und 4 gezeigten Einrichtung enthalten sein können.

Das in den Figuren Gezeigte wird im folgenden näher erläutert:
In Fig. 1 ist eine Vorrichtung zur Beseitigung von Ammoniak aus einem heißen Abgas A dargestellt. Nach Fig. 1 wird das z. B. von einem Kraftwerk gelieferte heiße Abgas A, das Sauerstoff O₂ und gasförmiges, zu entfernendes Ammoniak NH₃ enthält, über eine Zuleitung 1 dem Gaseintritt 2 eines Reaktors 4 zugeführt.

Dieser Reaktor 4 enthält einen Katalysator 6, der aus einer der vorgenannten Substanz-Kombinationen besteht. Insbesondere handelt es sich hierbei z. B. um einen Katalysator 6, der Titandioxid TiO₂ und Chromoxid Cr₂O₃ etwa im Verhältnis von 50 : 50 der Gewichtsprozente - bei Berücksichtigung eines Bindemittels - enthält. Der Katalysator 6 ist demnach so ausgebildet, daß er das Ammoniak NH₃ unter Zuhilfenahme des Sauerstoffs O₂ zu Stickstoff N₂ und Wasser H₂O oxidiert. Am Austritt 8 des Reaktors 4 ist eine Ableitung 10 angeschlossen. Diese Ableitung 10 führt praktisch ammoniakfreies Abgas A, das neben Stickstoff N₂ gegebenenfalls auch noch Sauerstoff O₂ enthält. Falls nicht ein besonderer Wasser-Abscheider vorgesehen ist, ist im Abgas A auch Wasserdampf H₂O enthalten. Am Austritt 8 ist an der Ableitung 10 eine Sonde 12 vorgesehen, die zur NH₃-Kontrollmessung dient. Zur Aufrechterhaltung einer kontinuierlichen Strömung durch den Reaktor 4 ist in der Ableitung 10 ein Gebläse 14 vorgesehen. Dieses Gebläse 14 könnte stattdessen auch in der Zuleitung 1 angeordnet sein.

In Fig. 2 ist eine Vorrichtung zur Beseitigung von Ammoniak NH₃ aus einem kalten Abgas A, das hier ebenfalls Sauerstoff O₂ enthält, dargestellt. Im vorliegenden Fall wird das Abgas A über eine Zuleitung 21 dem Eintritt 22 eines Wärmetauschers 24 zugeführt. In der Durchlaufkammer dieses Wärmetauschers 24 wird das Abgas A mit Hilfe der bei der Oxidation anfallenden Reaktionswärme auf eine Vorwärmtemperatur erwärmt, wie weiter unten deutlich wird. Vom Ausgang 26 des Wärmetauschers 24 wird das Abgas A über eine Zusatzheizung 27 dem Eintritt 28 eines Reaktors 30 zugeleitet. Dieser Reaktor 30 enthält wiederum einen der vorgenannten NH₃-Oxidationskatalysatoren, der hier mit 32 bezeichnet ist. Am Gasaustritt 34 des Reaktors 30 ist eine Ableitung 36 für das nunmehr ammoniakfreie Abgas A angeschlossen. Das Abgas enthält nunmehr lediglich Stickstoff N₂ und gegebenenfalls auch noch Sauerstoff O₂ und - falls kein Wasserabscheider vorhanden ist - auch Wasser H₂O in Dampfform. Es soll hier angemerkt werden, daß die Zusatzheizung 27 vorgesehen ist, um das in den Reaktor 30 eintretende Abgas A von der Vorwärmtemperatur auf die für eine optimale Oxidation des Ammoniaks erforderliche Temperatur zu bringen. Das in den Reaktor 30 eintretende Gasgemisch hat dabei vorzugsweise eine Temperatur im Bereich von 150 bis 300° C. Ersichtlich kann die Zusatzheizung 27 gegebenenfalls entfallen.

In der Abgasleitung 36 ist - analog zu Fig. 1 - ein Sensor 38 zur NH₃-Kontrollmessung angeordnet. Die Ableitung 36 ist weiterhin über ein Gebläse 40, das für eine ausreichende Strömungsgeschwindigkeit sorgt, mit der Vorwärmkammer des Wärmetauschers 24 verbunden. Das von Ammoniak NH₃ gereinigte Abgas A erwärmt in der Vorwärmkammer des Wärmetauschers 24 das vom Eintritt 22 einströmende, noch ungereinigte Abgas A (O₂, NH₃). An den Ausgang der Vorwärmkammer des Wärmetauschers 24 ist eine Abgasleitung 42 angeschlossen, an der das abgekühlte, gereinigte Abgas A abgenommen werden kann. Dieses Abgas A ist bei richtiger Temperaturwahl im Reaktor 30 und bei Verwendung der vorgenannten NH₃-Oxidationskatalysatoren 32 praktisch vollkommen frei von Ammoniak und kann, sofern in ihm keine weiteren Schadstoffe enthalten sind, wegen des alleinigen Vorhandenseins der unschädlichen Reaktionsprodukte N₂ und H₂O in die Atmosphäre entlassen werden.

Eine Wasserzuleitung 101, in der ammoniakhaltiges Abwasser fließt, ist nach Fig. 3 mit einer Austauschkolonne 102 verbunden. Die Austauschkolonne 102 weist außerdem eine Wasserableitung 103, eine Gaszuleitung 104 und eine Gasableitung 105 auf. In der Austauschkolonne 102 wird Ammoniak vom Wasser in das Gas übergeführt. Durch die Wasserableitung 103 wird ammoniakfreies Abwasser abgegeben, während über die Gasableitung 105 ein ammoniakhaltiges Gasgemisch die Austauschkolonne 102 verläßt. Die Gasableitung 105 ist über einen Wärmetauscher 106 und einen Erhitzer 107 mit dem Eingang eines Katalysators 108 verbunden.

Dem Katalysator 108 wird dabei ein erhitztes Gasgemisch zugeführt, das außer Ammoniak auch Sauerstoff, der aus der Luft stammt, enthält. Durch die im Katalysator 108 ablaufende chemische Reaktion werden Ammoniak und Sauerstoff in Stickstoff und Wasser umgewandelt. Der Ausgang des Katalysators 108 ist mit dem Wärmetauscher 106 verbunden. Im Wärmetauscher 106 steht das abgeleitete Gas thermisch mit dem dem Katalysator 108 zuzuleitenden Gas im Kontakt. Durch den Wärmeübergang wird das zuzuleitende Gas vorgewärmt, so daß die Leistung des Erhitzers 107 kurze Zeit nach dem Anfahren der Anlage nur noch klein zu sein braucht. Durch die exotherme Umsetzung von Ammoniak mit Sauerstoff kann bei genügend hohen Ammoniakkonzentrationen der Erhitzer 107 völlig abgeschaltet werden. Im Weg für das vom Katalysator 108 abgegebene Gas steht der Wärmetauscher 106 über ein Gebläse 109 mit der Gaszuleitung 104 der Austauschkolonne 102 in Verbindung. Dadurch ist ein nahezu geschlossener Gaskreislauf von der Austauschkolonne 102 über den Katalysator 108 zur Austauschkolonne 102 gegeben. Zur Kompensation des Sauerstoffverbrauches im Katalysator 108 ist von der Gaszuleitung 104 ausgehend eine Abgabeleitung 114 angeordnet und eine Ansaugleitung 113 für Frischluft ist zwischen Wärmetauscher 106 und Gebläse 109 angebunden. Der durch die chemische Reaktion im Katalysator 108 sich bildende Wasserdampf stört dessen Betrieb nicht. Der Wasserdampf kondensiert erst nach Passieren des Wärmetauschers 106 und wird mit dem ammoniakfreien Abwasser über die Wasserableitung 103 abgeführt. Mit dem nahezu geschlossenen Kreislauf erzielt man einen hohen Wirkungsgrad für die Ammoniakentfernung im Katalysator 108. Der Katalysator 108 nach FIG 3 ist ein Mischoxid-Katalysator, bestehend aus Schwermetalloxiden, der gegebenenfalls mit einem Edelmetall-Katalysator in Verbindung steht. Beispielsweise sind ein Edelmetall-Katalysator 110 und ein Mischoxid-Katalysator 111 nach FIG 4 miteinander gekoppelt. Dabei sind der Edelmetall-Katalysator 110 und der Mischoxid-Katalysator 111 in Serie angeordnet und der Edelmetall-Katalysator 110 ist durch eine Bypaßleitung 112 überbrückt. Die Bypaßleitung 112 ist gegenüber dem Edelmetall-Katalysator 110 so dimensioniert, daß sie ca. 40 % des ankommenden Gases aufnimmt. Der Edelmetall-Katalysator 110 läßt aus Luftsauerstoff und Ammoniak neben Wasser zunächst Stickoxid entstehen. Bevor das Stickoxid in Stickstoff und Sauerstoff zerfällt, gelangt es zusammen mit dem über die Bypaßleitung 112 herangeführten Gemisch aus sauerstoffhaltiger Luft und Ammoniak in den Mischoxid-Katalysator 111. Im Mischoxidkatalysator 111 wird die Umwandlung der zugeführten Gase durch das Vorhandensein von Stickoxid ermöglicht. Am Ausgang des Mischoxid-Katalysators 111 wird Stickstoff und Wasser abgegeben.

## Patentansprüche

1. Verfahren zum Entfernen von Ammoniak (NH₃) aus einer ammoniakhaltigen Flüssigkeit, insbesondere aus ammoniakhaltigem Abwasser, wobei nach einem Stoffaustausch ammoniakfreie Flüssigkeit und ammoniakhaltiges Gas (Abgas) abgegeben werden,
**dadurch gekennzeichnet,** daß das Gas in einem nahezu geschlossenen Kreislauf geführt wird, wobei das ammoniakhaltige Gas erwärmt wird, das erwärmte Gas bei einer vorgegebenen Temperatur einem selektiven Katalysator (6, 32, 108, 111) zugeführt wird, an dem das Ammoniak (NH₃) in Gegenwart von Sauerstoff zu Stickstoff (N₂) und Wasser (H₂O) oxidiert wird, wobei der Katalysator (6, 32, 108, 111) ein Mischoxid-Katalysator (108, 111) ist, der Titandioxid (TiO₂) und mindestens ein Oxid der Übergangsmetalle Vanadium (V), Chrom (Cr), Mangan (Mn), Eisen (Fe), Kobalt (Co), Nickel (Ni), Kupfer (Cu), Zink (Zn), Zirkon (Zr), Molybdän (Mo), Wolfram (W), Platin (Pt) und Rhodium (Rh) enthält, wobei vom Katalysator (6, 32, 108, 111) der Stickstoff (N₂) und das Wasser (H₂O) abgeleitet werden und die vom Katalysator (6, 32, 108, 111) abgegebene Substanz zum Erwärmen des Gases und zum Stoffaustausch verwendet wird.

2. Verfahren nach Anspruch 1,
**dadurch gekennzeichnet,** daß das ammoniakhaltige Gas ein Gemisch ist, das Sauerstoff, insbesondere Luft, enthalt, daß das Gemisch aufgeteilt wird, daß der erste Anteil des Gemisches einem Edelmetall-Katalysator (110) zugeführt wird, der Stickoxid abgibt, und daß der zweite Anteil des Gemisches zusammen mit dem im Edelmetall-Katalysator (110) gebildeten Stickoxid dem Mischoxid-Katalysator (111) zugeführt wird, der dann Stickstoff und Wasser abgibt.

3. Verfahren nach Anspruch 2,
**dadurch gekennzeichnet,** daß der erste Anteil des Gemisches ungefähr 60 % der Gesamtgasmenge ist.

4. Verfahren nach einem der Ansprüche 1 bis 3,
**dadurch gekennzeichnet,** daß der Katalysator (6, 32) außer Titandioxid (TiO₂) auch bevorzugt Chromoxid (Cr₂O₃) und/oder Manganoxid (MnO₂) und/oder Kupferoxid (CuO) enthält.

5. Verfahren nach Anspruch 4,
**dadurch gekennzeichnet,** daß der Anteil des Chromoxids (Cr₂O₃), des Manganoxids (MnO₂) oder des Kupferoxids (CuO) höchstens 50 Gew. % des Mischoxid-Katalysators ausmacht.

6. Verfahren nach einem der Ansprüche 1 bis 5,
**dadurch gekennzeichnet,** daß das Abgas (A) einschließlich Ammoniak (NH₃) und Sauerstoff (O₂) vor der Zuführung zum Katalysator (6, 32, 108, 111) auf eine Temperatur im Bereich von 150 bis 300 °C gebracht wird.

7. Verfahren nach einem der Ansprüche 1 bis 6,
**dadurch gekennzeichnet,** daß die Temperatur im Mischoxid-Katalysator (6, 32, 108, 111) höher ist als die Gaseintrittstemperatur.

8. Verfahren nach einem der Ansprüche 1 bis 7,
**dadurch gekennzeichnet,** daß dem Mischoxid-Katalysator (6, 32, 108, 111) an seinem Eingang Stickoxid zudosiert wird.

9. Verfahren nach einem der Ansprüche 1 bis 8,
**dadurch gekennzeichnet,** daß die ammoniakhaltige Flüssigkeit Abwasser eines Kraftwerkes ist, wobei das Abwasser Ammoniak aus zum Korrosionsschutz zugefügtem Hydrazin enthält.

10. Vorrichtung zum Entfernen von Ammoniak, wobei eine Wasserzuleitung (101) für eine ammoniakhaltige Flüssigkeit, insbesondere für ein ammoniakhaltiges Abwasser, mit einer Stoffaustauschkolonne (102) verbunden ist, die eine Gaszuleitung (104) aufweist und von der eine Wasserableitung (103) für ammoniakfreies Wasser und eine Gasableitung (105) für ammoniakhaltiges Gas (Abgas) ausgehen,
**dadurch gekennzeichnet,** daß in einem nahezu geschlossenen Kreislauf die Gasableitung (105) über den wärmeaufnehmenden Raum eines Wärmetauschers (24, 106) und über einen Erhitzer(27, 107) mit dem Eingang eines Katalysators (6, 32, 108, 111) verbunden ist und daß der Ausgang des Katalysators (6, 32, 108, 111) über den wärmeabgebenden Raum des Wärmetauschers (24, 106) und über ein Gebläse (109) mit der Gaszuleitung (104) der Stoffaustauschkolonne (102) verbunden ist, wobei der Katalysator (6, 32, 108, 111) ein Mischoxid-Katalysator ist, der Titandioxid (TiO₂) und mindestens ein Oxid der Übergangsmetalle Vanadium (V), Chrom (Cr), Mangan (Mn), Eisen (Fe), Kobalt (Co), Nickel (Ni), Kupfer (Cu), Zink (Zn), Zirkon (Zr), Molybdän (Mo), Wolfram (W), Platin (Pt) und Rhodium (Rh) enthält, und wobei vom Katalysator (6, 32,108, 111) Stickstoff (N₂) und Wasser (H₂O) abgeleitet werden.

11. Vorrichtung nach Anspruch 10,
**dadurch gekennzeichnet,** daß der Katalysator (6, 32) in einem Reaktor (4, 30) untergebracht ist, daß für den Transport des Gases zum Reaktor ein Gebläse (14, 40) dient und daß am Austritt (8, 34) des Reaktors eine Ableitung (10, 36) für ammoniakfreies Abgas vorgesehen ist.

12. Vorrichtung nach Anspruch 11,
**dadurch gekennzeichnet,** daß das Abgas (A) über einen Wärmetauscher (24) und gegebenenfalls eine Zusatzheizung (27) mit Hilfe eines Gebläses (40) dem den Katalysator (32) enthaltenden Reaktor (30) zugeleitet ist, an dessen Austritt (34) die Ableitung (36) für ammoniakfreies Abgas (A) vorgesehen ist, die über den Wärmetauscher (24) mit einer Abgasleitung (42) verbunden ist.

13. Vorrichtung nach einem der Ansprüche 10 bis 12,
**dadurch gekennzeichnet,** daß der Katalysator (6, 32, 108, 111) außer Titandioxid (TiO₂) auch bevorzugt Chromoxid (Cr₂O₃) und/oder Manganoxid (MnO₂) und/oder Kupferoxid (CuO) enthält.

14. Vorrichtung nach Anspruch 13,
**dadurch gekennzeichnet,** daß der Anteil des Chromoxids (Cr₂O₃), des Manganoxids (MnO₂) oder des Kupferoxids (CuO) höchstens 50 Gew. % des Mischoxid-Katalysators ausmacht.

15. Vorrichtung nach einem der Ansprüche 10 bis 14,
**dadurch gekennzeichnet,** daß der Katalysator (6, 32, 108, 111) einen Nebenbestandteil wie Phosphor (P) oder Schwefel (S) enthält.

16. Vorrichtung nach einem der Ansprüche 10 bis 15,
**dadurch gekennzeichnet,** daß der Katalysator (6, 32, 108, 111) ein Bindemittel enthält.

17. Vorrichtung nach einem der Ansprüche 10 bis 16,
**dadurch gekennzeichnet,** daß der Katalysator (6, 32, 108, 111) in Form von Platten, Waben oder Pellets vorliegt.

18. Vorrichtung nach einem der Ansprüche 10 bis 17,
**dadurch gekennzeichnet,** daß ein Edelmetall-Katalysator (110) und ein Mischoxid-Katalysator (111) in Serie angeordnet sind und daß der Edelmetall-Katalysator (110) durch eine Bypaß-Leitung (112) überbrückt ist, die ungefähr 40 % des ankommenden Gases aufnimmt.

## Claims

1. Process for the removal of ammonia (NH₃) from an ammoniacal liquid, particularly from ammoniacal waste water, wherein ammonia-free liquid and ammonium-containing gas (waste gas) are discharged after an exchange of material, characterised in that
the gas is led through an almost closed circuit wherein the ammonia-containing gas is heated, the heated gas is fed at a predetermined temperature to a selective catalyst (6, 32, 108, 111) on which the ammonia NH₃ is oxidised in the presence of oxygen to nitrogen (N₂) and water (H₂O), the catalyst (6, 32, 108, 111) being a mixed-oxide catalyst (108, 111) that contains titanium dioxide (TiO₂) and at least one oxide of the transition metals vanadium (V), chromium (Cr), manganese (Mn), iron (Fe), cobalt (Co), nickel (Ni), copper (Cu), zinc (Zn), zirconium (Zr), molybdenum (Mo), tungsten (W), platinum (Pt) and rhodium (Rh), the nitrogen (N₂) and the water (H₂O) are discharged and the material discharged from the catalyst (6, 32, 108, 111) is used to heat the gas and for the exchange of material.

2. Process according to claim 1, characterised in that the ammonia-containing gas is a mixture that contains oxygen, in particular air; that the mixture is divided; that the first part of the mixture is fed to a precious metal catalyst (110) which gives off nitrogen monoxide; and that the second part of the mixture is fed, together with the nitrogen monoxide formed in the precious metal catalyst (110), to the mixed-oxide catalyst (111), which then discharges nitrogen and water.

3. Process according to claim 2, characterised in that the first part of the mixture amounts to about 60% of the total quantity of gas.

4. Process according to one of claims 1 to 3, characterised in that the catalyst (6, 32), apart from titanium dioxide (TiO₂), also preferably contains chromium oxide (Cr₂O₃) and/or manganese oxide (MnO₂) and/or copper oxide (CuO).

5. Process according to claim 4, characterised in that the proportion of the chromium oxide (Cr₂O₃), the manganese oxide (MnO₂) or the copper oxide (CuO) amounts to at most 50% by weight of the mixed-oxide catalyst.

6. Process according to one of claims 1 to 5, characterised in that waste gas (A) including ammonia (NH₃) and oxygen (O₂) is brought to a temperature in the range 150 to 300°C before feeding to the catalyst (6, 32, 108, 111).

7. Process according to one of claims 1 to 6, characterised in that the temperature in the mixed-oxide catalyst (6, 32, 108, 111) is higher than the gas inlet temperature.

8. Process according to one of claims 1 to 7, characterised in that nitrogen monoxide is fed in metered amounts to the mixed-oxide catalyst (6, 32, 108, 111) at its inlet.

9. Process according to one of claims 1 to 8, characterised in that the ammoniacal liquid is waste water from a power station, the waste water containing ammonia from hydrazine added for protection from corrosion.

10. Apparatus for the removal of ammonia, wherein a water feed line (101) for an ammoniacal liquid, in particular for an ammoniacal waste water, is connected to a material exchange column (102) that is provided with a gas feed line (104) and from which a water discharge line (103) for ammonia-free water and a gas discharge line (105) for ammonia-containing gas (waste gas) lead off,
characterised in that
in an almost closed circuit the gas discharge line (105) is connected to the heat-absorbing space of a heat exchanger (24, 106) and via a heater (27, 107) to the inlet to a catalyst (6, 32, 108, 111) and that the outlet from the catalyst (6, 32, 108, 111) is connected to the heat dissipating space of the heat exchanger (24, 106) and via a blower (109) to the gas feed line (104) of the material exchange column (102), the catalyst (6, 32, 108, 111) being a mixed-oxide catalyst that contains titanium dioxide (TiO₂) and at least one oxide of the transition metals vanadium (V), chromium (Cr), manganese (Mn), iron (Fe), cobalt (Co), nickel (Ni), copper (Cu), zinc (Zn), zirconium (Zr), molybdenum (Mo), tungsten (W), platinum (Pt) and rhodium (Rh), and nitrogen (N₂) and water (H₂O) being led off from the catalyst (6, 32, 108, 111).

11. Apparatus according to claim 10, characterised in that the catalyst (6, 32) is accommodated in a reactor (4, 30), that for the transport of the gas to the reactor a blower (14, 40) is used and that at the outlet (8, 34) of the reactor a discharge line (10, 36) for ammonia-free waste gas is provided.

12. Apparatus according to claim 11, characterised in that the waste gas (A) is fed by means of a blower (40) via a heat exchanger (24) and optionally an auxiliary heater (27) to the reactor (30) containing the catalyst (32), at the outlet (34) of which the discharge line (36) for ammonia-free waste gas is provided that is connected via the heat exchanger (24) to a waste gas line (42).

13. Apparatus according to one of claims 10 to 12, characterised in that the catalyst (6, 32, 108, 111), besides titanium dioxide (TiO₂) preferably also contains chromium oxide (Cr₂O₃) and/or manganese oxide (MnO₂) and/or copper oxide (CuO).

14. Apparatus according to claim 13, characterised in that the proportion of the chromium oxide (Cr₂O₃), of the manganese oxide (MnO₂) or of the copper oxide (CuO) amounts to at most 50% by weight of the mixed-oxide catalyst.

15. Apparatus according to one of claims 10 to 14, characterised in that the catalyst (6, 32, 108, 111) contains a secondary constituent such as phosphorus (P) or sulphur (S).

16. Apparatus according to one of claims 10 to 15, characterised in that the catalyst (6, 32, 108, 111) contains a binder.

17. Apparatus according to one of claims 10 to 16, characterised in that the catalyst (6, 32, 108, 111) is present in the form of plates, honeycombs or pellets.

18. Apparatus according to one of claims 10 to 17, characterised in that a precious metal catalyst (110) and a mixed-oxide catalyst (111) are arranged in series and that the precious metal catalyst (110) is by-passed by a by-pass line (112) which takes about 40% of the oncoming gas.

## Revendications

1. Procédé d'élimination de l'ammoniac (NH₃) d'un liquide contenant de l'ammoniac, en particulier des effluents contenant de l'ammoniac, par lequel on produit après un échange de matière un liquide exempt d'ammoniac et un gaz contenant de l'ammoniac (gaz effluent), caractérisé en ce que le gaz est conduit vers un circuit presque fermé, où le gaz contenant de l'ammoniac est échauffé, le gaz échauffé est conduit à un catalyseur sélectif (6, 32, 108, 111) à une température donnée, sur lequel l'ammoniac (NH₃) est oxydé en présence d'oxygène en azote (N₂) et en eau (H₂O), le catalyseur (6, 32, 108, 111) étant un catalyseur à oxydes mixtes (108, 111) qui contient du dioxyde de titane (TiO₂) et au moins un oxyde des métaux de transition vanadium (V), chrome (Cr), manganèse (Mn), fer (Fe), cobalt (Co), nickel (Ni), cuivre (Cu), zinc (Zn), zirconium (Zr), molybdène (Mo), tungstène (W), platine (Pt) et rhodium (Rh), où de l'azote (N₂) et de l'eau (H₂O) sont évacués du catalyseur (6, 32, 108, 111) et où la substance dégagée du catalyseur (6, 32, 108, 111) est utilisée pour l'échauffement du gaz et pour l'échange de matière.

2. Procédé selon la revendication 1, caractérisé en ce que le gaz contenant de l'ammoniac est un mélange qui contient de l'oxygène, en particulier de l'air, en ce que le mélange est divisé, en ce que la première fraction du mélange est conduite vers un catalyseur de métal noble (110) qui libère de l'oxyde d'azote, et en ce que la deuxième fraction du mélange est conduite ensemble avec de l'oxyde d'azote formé dans le catalyseur de métal noble (110) vers un catalyseur à oxydes mixtes (111) qui libère alors de l'azote et de l'eau.

3. Procédé selon la revendication 2, caractérisé en ce que la première fraction du mélange représente environ 60 % de la quantité totale de gaz.

4. Procédé selon l'une quelconque des revendications 1 à 3, caractérisé en ce que le catalyseur (6, 32) contient outre du dioxyde de titane (TiO₂) aussi, de préférence, de l'oxyde de chrome (Cr₂O₃) et/ou de l'oxyde de manganèse (MnO₂) et/ou de l'oxyde de cuivre (CuO).

5. Procédé selon la revendication 4, caractérisé en ce que la fraction de l'oxyde de chrome (Cr₂O₃), de l'oxyde de manganèse (MnO₂) ou de l'oxyde de cuivre (CuO) représente au maximum 50 % en poids du catalyseur à oxydes mixtes.

6. Procédé selon l'une quelconque des revendications 1 à 5, caractérisé en ce que le gaz effluent (A), y compris l'ammoniac (NH₃) et l'oxygène (O₂), est porté à une température dans la gamme de 150 à 300 °C avant la conduite vers le catalyseur (6, 32, 108, 111).

7. Procédé selon l'une quelconque des revendications 1 à 6, caractérisé en ce que la température dans le catalyseur à oxydes mixtes (6, 32, 108, 111) est supérieure à la température d'alimentation du gaz.

8. Procédé selon l'une quelconque des revendications 1 à 7, caractérisé en ce que de l'oxyde d'azote est ajouté par dosage à l'entrée du catalyseur à oxydes mixtes (6, 32, 108, 111).

9. Procédé selon l'une quelconque des revendications 1 à 8, caractérisé en ce que le liquide contenant de l'ammoniac est un effluent d'une centrale électrique, l'effluent contenant de l'ammoniac provenant de l'hydrazine ajouté dans un but de protection contre la corrosion.

10. Dispositif d'élimination de l'ammoniac, dans lequel une canalisation d'alimentation d'eau (101) pour un liquide contenant de l'ammoniac, en particulier pour un effluent contenant de l'ammoniac, est reliée à une colonne d'échange de matière (102) qui présente une canalisation d'alimentation de gaz (104) et de laquelle partent une canalisation de sortie d'eau (103) pour l'eau exempte d'ammoniac et une canalisation de sortie de gaz (105) pour le gaz contenant de l'ammoniac (gaz effluent), caractérisé en ce que, dans un circuit presque fermé, la canalisation de sortie de gaz (105) est reliée par la chambre d'absorption thermique de l'échangeur de chaleur (24, 106) et par un réchauffeur (27, 107) à l'alimentation d'un catalyseur (6, 32, 108, 111) et en ce que la sortie du catalyseur (6, 32, 108, 111) est reliée par la chambre de dissipation thermique de l'échangeur de chaleur (24, 106) et par un ventilateur (109) à la canalisation d'alimentation de gaz (104) de la colonne d'échange de matière (102), le catalyseur (6, 32, 108, 111) étant un catalyseur à oxydes mixtes qui contient du dioxyde de titane (TiO₂) et au moins un oxyde des métaux de transition vanadium (V), chrome (Cr), manganèse (Mn), fer (Fe), cobalt (Co), nickel (Ni), cuivre (Cu), zinc (Zn), zirconium (Zr), molybdène (Mo), tungstène (W), platine (Pt) et rhodium (Rh), où de l'azote (N₂) et de l'eau (H₂O) sont évacués du catalyseur (6, 32, 108, 111).

11. Dispositif selon la revendication 10, caractérisé en ce que le catalyseur (6, 32) est logé dans un réacteur (4, 30), en ce qu'un ventilateur (14, 40) sert pour le transport du gaz vers le réacteur et en ce qu'une canalisation de sortie (10, 36) est prévue à la sortie (8, 34) du réacteur pour le gaz effluent exempt d'ammoniac.

12. Dispositif selon la revendication 11, caractérisé en ce que le gaz effluent (A) est conduit par un échangeur de chaleur (24) et le cas échéant par un chauffage supplémentaire (27) à l'aide d'un ventilateur (40) vers le réacteur (30) contenant le catalyseur (32), à la sortie duquel (34) la canalisation de sortie (36) est prévue pour le gaz effluent (A) exempt d'ammoniac qui est reliée par l'échangeur de chaleur (24) à la canalisation de sortie du gaz (42).

13. Dispositif selon l'une quelconque des revendications 10 à 12, caractérisé en ce que le catalyseur (6, 32, 108, 111) contient outre du dioxyde de titane (TiO₂) aussi, de préférence, de l'oxyde de chrome (Cr₂O₃) et/ou de l'oxyde de manganèse (MnO₂) et/ou de l'oxyde de cuivre (CuO).

14. Dispositif selon la revendication 13, caractérisé en ce que la fraction de l'oxyde de chrome (Cr₂O₃), de l'oxyde de manganèse (MnO₂) ou de l'oxyde de cuivre (CuO) représente au maximum 50 % en poids du catalyseur à oxydes mixtes.

15. Dispositif selon l'une quelconque des revendications 10 à 14, caractérisé en ce que le catalyseur (6, 32, 108, 111) contient un constituant secondaire, tel que le phosphore (P) ou le soufre (S).

16. Dispositif selon l'une quelconque des revendications 10 à 15, caractérisé en ce que le catalyseur (6, 32, 108, 111) contient un agent liant.

17. Dispositif selon l'une quelconque des revendications 10 à 16, caractérisé en ce que le catalyseur (6, 32, 108, 111) se trouve sous forme de plaques, d'alvéoles ou de pellets.

18. Dispositif selon l'une quelconque des revendications 10 à 17, caractérisé en ce qu'un catalyseur de métal noble (110) et un catalyseur à oxydes mixtes (111) sont disposés en série et en ce que le catalyseur de métal noble (110) est court-circuité par une canalisation de dérivation (112) qui reçoit environ 40 % du gaz d'arrivée.
